# EUROPÄISCHE PATENTSCHRIFT

(11) **EP 0 294 774 B1**
(45) Veröffentlichungstag und Bekanntmachung des Hinweises auf die Patenterteilung: **13.01.1993**
(21) Anmeldenummer: 88109094.8
(22) Anmeldetag: 08.06.1988
(51) Int. Cl.: C07F 9/40, C07C 69/65, C07C 69/653

(54) **Verfahren zur Herstellung von Gamma-Halogen-tiglinsäurealkylestern sowie deren Weiterverarbeitung zu 0,0-Dialkyl-Gamma-phosphono-tiglin-säurealkylestern**
Process for the preparation of gamma-halogen tiglinic acid alkylesters and their subsequent processing to 0,0-dialkyl-gamma-phosphono-alkyl tiglinic acid alkyl esters
Procédé de préparation d'esters de l'acide gamma-halogène téglinique et leur transformation en alkylesters de l'acide 0,0-dialkyl-gamma-phosphono-téglinique

(30) Priorität: 12.06.1987 DE 3719622
(43) Veröffentlichungstag der Anmeldung: 14.12.1988
(73) Patentinhaber: BASF Aktiengesellschaft, 67063 Ludwigshafen (DE)
(72) Erfinder: Knaus, Günter H., Dr., D-6700 Ludwigshafen (DE); Ernst, Hansgeorg, Dr., D-6720 Speyer (DE); Thyes, Marco, Dr., D-6700 Ludwigshafen (DE); Paust, Joachim, Dr., D-6708 Neuhofen (DE)

(56) Entgegenhaltungen:
- EP-A- 0 110 329
- DE-A- 3 244 272
- JOURNAL OF THE CHEMICAL SOCIETY 1968, Seite 2005, Absatz 4
- CHEMICAL ABSTRACTS Band 96, Nr. 9, 1. März 1982, Seiten 555,556, Zusammenfassung Nr. 68357j, Columbus, Ohio, US; & JP-A-81118038 (IHARA CHEMICAL INDUSTRY CO., LTD.) 16.09.1981

## Beschreibung

γ-Halogen-tiglinsäureester werden in Form der entsprechenden Wittig-Reagentien (3-Alkoxycarbonyl-2-buten-1-triphenylphosphoniumhalogenide) als C₅-Bausteine in der Polyenchemie, beispielsweise für die Herstellung von β-Apo-8′-carotinsäureestern benötigt (vgl. DOS 3 244 272). Für die Synthese der in loc. cit. beschriebenen β-Apo-8′-carotinsäureethylester sind vor allem die γ-Halogen-tiglinsäureethylester von Interesse.

Aus der EP-A-110 329 ist nun ein Verfahren zur Herstellung von γ-Chlor- und γ-Brom-tiglinsäureestern niederer Alkohole bekannt. Als wesentliches Zwischenprodukt treten in diesem Verfahren die 2-Methyl-3-buten-säureester der allgemeinen Formel II (hier α-Vinyl-propionsäureester genannt) auf, die durch Addition von Chlor oder Brom in die 2-Methyl-3,4-dihalogen-buttersäureester der allgemeinen Formel III überführt werden. Durch Dehydrohalogenierung erhält man hieraus die γ-Halogen-tiglinsäureester der allgemeinen Formel I

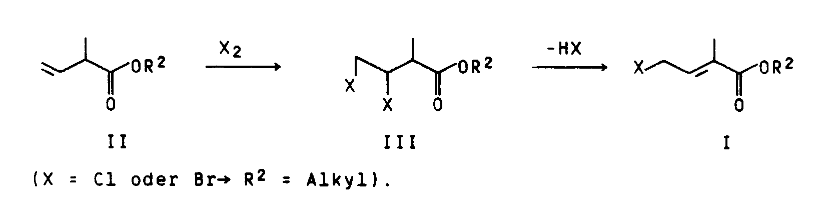

Dieses an sich vorteilhafte Verfahren bringt bei einer Durchführung im technischen Maßstab einige Probleme mit sich. So wird beispielsweise die Halogenierung - wie allgemein üblich - in chlorierten Kohlenwasserstoffen als Lösungsmittel durchgeführt, was aus verfahrenstechnischen Gründen (aufwendige Lösungsmittelrückführung) und ökologischen Gründen (Toxizität der chlorierten Kohlenwasserstoffe) ungünstig ist. Darüberhinaus wird die Dehydrohalogenierung mit Alkalialkoholaten durchgeführt, wodurch die Stoffeinsatzkosten recht hoch sind und die Verfahrensführung durch den dabei nötigen Wasserausschluß erschwert ist.

Es wurde nun überraschenderweise gefunden, daß man die bei der Überführung in den technischen Maßstab auftretenden Probleme auf elegante Weise lösen kann, indem man
a) die Halogenierung in Abwesenheit von Lösungsmitteln durchführt und
b) die Dehydrohalogenierung anstelle mit Alkalialkoholaten mit Alkalihydroxiden in einem niederen Alkohol oder sogar in Wasser, dem ein niederes Alkanol als Lösungsvermittler zugesetzt wurde, durchführt.

Gegenstand der Erfindung ist daher ein Verfahren zur Herstellung von γ-Halogen-tiglinsäurealkylestern der allgemeinen Formel I 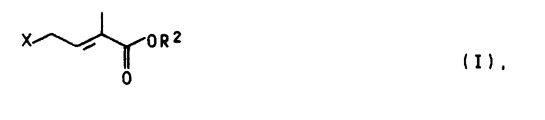
in der X für Cl oder Br steht und R² für eine Alkylgruppe mit 1 bis 3 C-Atomen, vorzugsweise eine Ethylgruppe, steht, das dadurch gekennzeichnet ist, daß man
a) die entsprechenden 2-Methyl-3-buten-säureester der allgemeinen Formel II 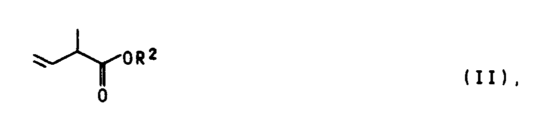 in der R² die oben angegebene Bedeutung hat, in Abwesenheit eines Lösungsmittels mit Chlor oder Brom umsetzt und
b) die dabei erhaltenen 2-Methyl-3,4-dihalogen-buttersäureester der allgemeinen Formel III 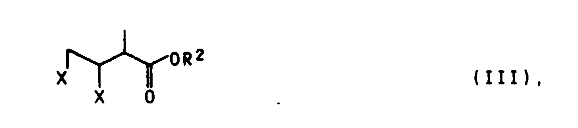 in der X für Chlor oder Brom steht, durch Umsetzen mit der Lösung eines Alkalimetallhydroxids in dem Alkohol R²OH, worin R² die oben angegebene Bedeutung hat, oder einem Gemisch aus Wasser und dem Alkohol R²OH dehydrohalogeniert.

Es war überraschend, daß die Halogenaddition auch ohne Mitverwendung inerter Lösungsmittel mit sehr guten Ausbeuten und großer Selektivität durchgeführt werden kann, da bei ähnlichen Halogenierungen im allgemeinen die Mitverwendung von inerten Lösungsmitteln, vorzugsweise von halogenierten Kohlenwasserstoffen vorgeschrieben wird (vgl. EP 31 932 und "Organikum", 11. Auflage, VEB Deutscher Verlag der Wissenschaften, Berlin, 1972).

Daß die Dehydrohalogenierung der 2-Methyl-3,4-dihalogen-buttersäureester der Formel III mit Alkalihydroxiden anstelle der nach dem Stand der Technik erforderlichen erheblich teureren Alkalialkoholate mit ausgezeichneten Ausbeuten durchgeführt werden kann, konnte nicht erwartet werden, da bei der Dehydrohalogenierung mit Alkalihydroxid Wasser frei wird und allgemein bekannt ist, daß Carbonsäureester niederer Alkohole in wäßrigalkoholischem Milieu unter Einwirkung von Alkalien glatt und irreversibel zu den entsprechenden Carboxylaten verseift werden. Demgegenüber kann die erfindungsgemäße Dehydrohalogenierung sogar mit wäßriger Alkalimetallhydroxidlösung durchgeführt werden.

Ein weiterer Nachteil des aus loc. cit. bekannten Verfahrens ist, daß dieses Verfahren keine sterisch einheitlichen γ-Halogen-tiglinsäureester liefert, sondern E/Z-Isomerengemische mit beträchtlichem Z-Anteil.

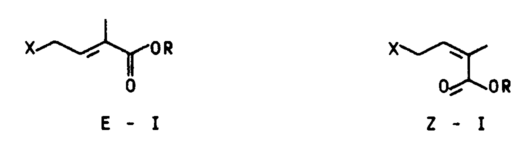

Für die Herstellung von β-Apo-8′-carotinsäureethylester wird jedoch ein möglichst isomerenreiner E-γ-Halogen-tiglinsäureethylester benötigt.

Das erfindungsgemäße Verfahren liefert rohe γ-Halogen-tiglinsäureester als E/Z-Isomerengemische mit einem Z-Anteil von etwa 25 bis 50 % in hervorragender Ausbeute und guter chemischer Reinheit.

Zahlreiche Umsetzungen in der Polyenchemie werden anstelle durch Wittig-Reaktion bevorzugt mittels der unter milderen Bedingungen verlaufenden Horner-Wittig-Reaktion durchgeführt; d.h. man setzt die Halogentiglinsäureester nicht mit Triphenylphosphin und Säure zu den Phosphoniumsalzen und diese anschließend mit starken Basen zu den entsprechenden Yliden um, sondern mit Phosphorigsäuretrialkylestern zu den korrespondierenden Phosphonaten, die dann unter Einwirkung einer Base mit der Formylgruppe der zweiten Komponente reagieren.

Es wurde nun überraschenderweise gefunden, daß bei der Umsetzung von γ-Halogen-tiglinsäurealkylestern mittels der Michaelis-Arbusow-Reaktion (vgl. Houben-Weyl, 12/1, S. 434 und loc. cit. 5/1d, Seite 128) in die für Horner-Wittig-Reaktionen benötigten 0,0-Dialkyl-γ-phosphono-tiglinsäurealkylester eine beträchtliche Isomerisierung in Richtung der benötigten E-Isomeren auftritt. Ausgehend von γ-Chlor-tiglinsäureethylester mit einer E/Z-Isomerenzusammensetzung von 1,7:1 kann in guten Ausbeuten das entsprechende Phosphonat mit einem E/Z-Isomerenverhältnis von 7-8/1 isoliert werden.

Dieses Ergebnis ist um so überraschender, als bei der literaturbekannten Umsetzung von 4-Brom-3-methyl-crotonsäuremethylester mit Phosphorigsäuretriethylester unter durchaus vergleichbaren Reaktionsbedingungen der entsprechende 0,0)Diethyl-4-phosphono-3-methyl-crotonsäuremethylester lediglich als E/Z-Isomerengemisch im Verhältnis 3 : 2 erhalten werden konnte (s. J. Chem. Soc. C (1968), S. 1991 und J. Chem. Soc. C (1966), S. 2163).

Die gefundene thermische Isomerisierung erhöht den Wert der Phosphonate als Bausteine zur Darstellung von Polyenen mittels Horner-Wittig Reaktion. Diese verlaufen bekannterweise stereoselektiv bezüglich der neugebildeten Doppelbindung (Chem. Rev. 1974, S 92, Houben-Weyl 5/1d S. 129), so daß beim Einsatz von auf diese Weise hergestellten Phosphonaten aufgrund ihres hohen E-Anteils folgerichtig eine hohe Ausbeute an den begehrten (all-E)-Polyenen zu erwarten ist.

Eine weitere, technisch sehr relevante Verbesserung des Verfahrens ist durch die Verwendung von γ-Brom-tiglinsäureestern gegenüber den bisher üblichen γ-Chlor-tiglinsäureestern möglich. Mit diesen Bromverbindungen verläuft die Phosphonatbildung bereits bei Temperaturen zwischen 70°C und 100°C und dauert nur 1,5 bis 2 Stunden. Der Phosphorigsäuretrialkylester wird in 10 bis 60 %igem Überschuß eingesetzt. Unter diesen Reaktionsbedingungen unterbleibt die bei der analogen Reaktion von γ-Chlor-tiglinsäureestern als Nebenreaktion auftretende Bildung eines Lactons aus dem Z-Isomeren, was die Ausbeute an gewünschtem Wertprodukt weiter erhöht.

Zudem wird bei Verwendung der γ-Brom-tiglinsäureester Ethylbromid frei, das aufgrund des höheren Siedepunktes (38°C) technisch wesentlich einfacher als Ethylchlorid (13°C) zu handhaben ist. Ethylchlorid muß nämlich wegen seines niederen Siedepunktes in gekühlten Lösungsmitteln aufgefangen werden - die Lösungen werden im allgemeinen verbrannt. Ethylbromid dagegen kann als solches sauber aufgefangen und daher weiterverwendet werden.

Die weitere Isomerisierung der erhaltenen E/Z-Phosphonatgemische kann auf einfache Weise durch Erhitzen der nach Abdestillieren der Leichtsieder erhaltenen Rohprodukte durchgeführt werden, ohne daß es dabei zu nennenswerter Zersetzung kommt. Durch Destillation erhält man die gewünschten Phosphonate in Ausbeuten von 86 bis 89 % mit einem E/Z-Isomerenverhältnis von 7 bis 8:1.

Als besonders vorteilhaft erweist sich, daß man die bei der Dehydrohalogenierung der 2-Methyl-3,4-dibrom-buttersäureester erhaltenen γ-Bromtiglinsäureester ohne Reinigung mit Phosphorigsäuretrialkylestern in der gewünschten Weise zu Phosphonaten umsetzen kann, ohne daß es dabei im Vergleich zur Umsetzung der durch Destillation gereinigten Bromtiglinsäureester zu Ausbeuteverlusten kommt.

Die Tatsache, daß somit die Reinigung auf der γ-Brom-tiglinsäureesterstufe unterbleiben kann, ist naturgemäß verfahrenstechnisch günstig und wirkt sich zudem positiv auf die Gesamtausbeute an Phosphonat bezogen auf die eingesetzten 2-Methyl-butensäureester aus. Die Ausbeute über drei Stufen beläuft sich somit auf 77 bis 80 % (d.h. etwa 90 bis 95 % pro Stufe), was bei Verwendung so reaktiver Vergindungen beachtlich ist.

Gegenstand der Erfindung ist daher auch ein Verfahren zur Herstellung von 0,0-Dialkyl-γ-phosphono-tiglinsäureestern der allgemeinen Formel IV 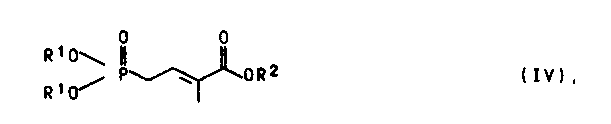
in der R¹ für Alkyl mit 1 bis 4 C-Atomen und R² für Alkyl mit 1 bis 3 C-Atomen, vorzugsweise Ethyl steht,das dadurch gekennzeichnet ist, daß man, wie oben beschrieben, γ-Halogen-tiglinsäurealkylester der allgemeinen Formel I 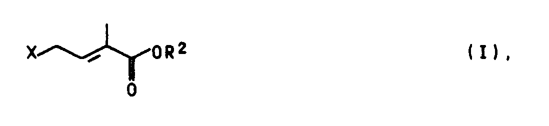
in der X für Cl oder Br, vorzugsweise für Br steht, und R² die oben angegebene Bedeutung hat, herstellt, mit Phosphorigsäuretrialkylestern der allgemeinen Formel V 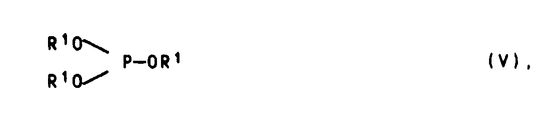
in der R¹ die oben angegebene Bedeutung hat, umsetzt und die erhaltenen E/Z-0,0-Dialkyl-γ-phosphono-tiglinsäureester thermisch zu den gewünschten 0,0-Dialkyl-γ-phosphono-tiglinsäureestern mit hohen E-Anteilen isomerisiert.

Die für die Herstellung des begehrten β-Apo-8′-carotinsäureethylesters benötigten 0,0-Dialkyl-γ-phosphono-tiglinsäureethylester der Formel IV sind in der Literatur aus J. Chem. Soc. C (1968), Seiten 1997 bis 2006, bes. 2005 sowie der DE 32 44 272 bekannt.

Zur erfindungsgemäßen Halogenierung der 2-Methyl-3-buten-säureester der Formel II legt man im allgemeinen diese Verbindungen vor und trägt bei etwa -40 bis +20°C. vorzugsweise -10 bis 0°C in ca. 0.5 bis 2 Stunden, vorzugsweise 1 Stunde, 1,0 bis 1,1 Äquivalente des Halogens ein. Chlor wird hierbei in das Reaktionsgemisch eingegast, das Brom dagegen in flüssiger Form zugefügt. Überraschenderweise erhält man hierbei die Dihalogenide der Formel III, insbesondere die Dibromide der Formel III in ausgezeichneten Ausbeuten und Reinheiten.

Die rohen Dihalogenide können destillativ gereinigt werden; dies ist aber nicht unbedingt erforderlich, da sie ohne weiteres direkt als Rohprodukte in die Folgestufe eingesetzt werden können.

Die erfindungsgemäße Dehydrohalogenierung der 2-Methyl-3,4-dihalogenbuttersäureester der Formel III ist in verschiedenen Ausführungsformen möglich.

Beispielsweise löst man 1,0 bis 1,1 Äquivalente des festen Alkalihydroxids in demjenigen Alkohol, der dem Esterrest R² entspricht, und läßt diese Lösung innerhab von 0,5 bis 1,5 Stunden zu dem rohen oder destillierten Dihalogenid der Formel III in Substanz zulaufen. Die Reaktionstemperatur wird dabei zwischen etwa +20 bis -20°C gehalten. Besonders geeignet sind Temperaturen von etwa 0 bis -5°C.

Alternativ kann auch eine wäßrige Lösung des Alkalimetallhydroxids eingesetzt werden. Hierbei ist es erforderlich, den dem Esterrest R² entsprechenden Alkohol als Lösungsvermittler zuzusetzen. Entweder läßt man eine Mischung aus wäßriger Hydroxidlösung und Alkohol zu dem in Substanz vorgelegten Dihalogenid zulaufen, oder man verdünnt das vorgelegte Dihalogenid mit dem betreffenden Alkohol und laßt die wäßrige Hydroxidlösung zulaufen. Auch für diese Verfahrensvarianten gelten die oben angegebenen Reaktionsbedingungen hinsichtlich der Dosierung des Hydroxids, der Reaktionszeit und der Reaktionstemperatur.

Dieses Dehydrohalogenierungsverfahren liefert rohe γ-Halogentiglinester als E/Z-Isomerengemische mit einem Z-Anteil von etwa 25 bis 50 % in hervorragender Ausbeute und guter chemischer Reinheit.

Die Rohprodukte können destillativ aufgereinigt werden. Sie sind andererseits so sauber, daß sie bei Weiterverarbeitung ohne weiteres direkt in die Folgestufe eingesetzt werden können; dies gilt sowohl dann, wenn destillierte Dihalogenide in die Dehydrohalogenierung eingesetzt werden, als auch für rohe, nicht gereinigte Dihalogenide.

Die erhaltenen γ-Halogentiglinester können nun gewünschtenfalls mittels Michaelis-Arbusow-Reaktion (Houben-Weyl, 12/1, S. 434, 5/1d, S. 128) in die für Horner-Wittig-Reaktionen begehrten 0,0-Dialkyl-γ-phosphono-tiglinsäurealkylester der Formel IV überführt werden.

Hierzu tropft man die γ-Halogen-tiglinsäureester zu siedendem Phosphorigsäuretrialkylester und erhitzt, bis kein Edukt mehr nachweisbar ist. Es erweist sich als zweckmäßig, die Phosphorigsäuretrialkylester in etwa 10 bis 60 % Überschuß vorzulegen. Die reinen Phosphonate können durch Destillation isoliert werden. Überraschenderweise wurde gefunden, daß beim Einsatz von E/Z-Isomerengemischen der γ-Halogen-tiglinsäureester unter den Reaktionsbedingungen bereits eine beträchtliche Isomerisierung in Richtung auf das gewünschte E-Isomer auftritt.

Die weitere Isomerisierung der erhaltenen E/Z-Phosphonat-Isomerengemische kann auf einfache Weise durch Erhitzen der nach Abdestillieren der Leichtsieder erhaltenen Rohprodukte durchgeführt werden, ohne daß es dabei zu nennenswerter Zersetzung kommt. Durch Destillation erhält man die Phosphonate der Formel I in Ausbeuten von 86 bis 89 % mit einem E/Z-Isomerenverhältnis von 7 bis 8:1.

Mit Hilfe der erfindungsgemäßen Verfahren gelingt es, die für zahlreiche Umsetzungen in der Polyenchemie als C₅-Bausteine besonders geeigneten 0,0-Dialkyl-γ-phosphonotiglinsäureester der allgemeinen Formel IV, insbesondere den für die Herstellung des begehrten β-Apo-8′-carotinsäureethylester wichtigen, noch nicht als Substanz beschriebenen 0,0-Dialkyl-γ-phosphono-tiglinsäureethylester, auf technisch einfache und billige Weise in ausgezeichneter Ausbeute und im wesentlichen in Form des für die weitere Umsetzung benötigten E-Isomeren herzustellen. Bei dem erfindungsgemäßen Verfahren können die Halogenierung und die Dehydrohalogenierung im gleichen Reaktionsgefäß und ohne jegliche Zwischenisolierung durchgeführt werden. Auch wenn hierbei 3 Reaktionsstufen ohne Zwischenreinigung durchgeführt werden, erhält man die Phosphonate der Formel IV in gaschromatographisch reiner Form in Gesamtausbeuten von 77 bis 80 % über 3 Stufen, was beim Arbeiten mit so hochreaktiven Verbindungen sehr erstaunlich ist. Die Phosphonate der Formel IV haben gegenüber den bisher für solche Umsetzungen verwendeten entsprechenden Triarylphosphoniumsalzen den verfahrenstechnisch erheblichen Vorteil, daß sie als Flüssigkeiten wesentlich leichter zu handhaben sind.

### Beispiel 1

### a) γ-Brom-tiglinsäureethylester

640 g 2-Methyl-3-buten-säureethylester (96 %ig, entsprechend 4,80 mol) wurden bei -25°C vorgelegt. Innerhalb von 1 Stunde (h) ließ man bei dieser Temperatur 800 g (5,0 mol) Brom zulaufen. Man rührte noch 30 Minuten (min) nach und ließ in dieser Zeit die Temperatur auf -5°C ansteigen.

Dann gab man bei einer Innentemperatur von -5 bis 0°C innerhalb von einer Stunde (1 h) eine Lösung von 200 g (5,0 mol) festem Natriumhydroxid in 2 l Ethanol zu, rührte wiederum 30 min nach, goß das Reaktionsgemisch auf 5 l verdünnte Schwefelsäure (ca. 1 bis 2 g konz. H₂SO₄ pro l Wasser) und trennte die organische Phase ab. Die wäßrige Phase wurde zweimal mit Methylenchlorid extrahiert. Die vereinigten organischen Phasen wurden über Natriumsulfat getrocknet und am Rotationsverdampfer eingeengt.

Auswaage: 1089 g roher γ-Brom-tiglinsäureethylester
Das Produkt enthielt nach NMR-Analyse
28,8 Gew.% Z-γ-Bromtiglinsäureethylester und
53,6 Gew.% E-γ-Bromtiglinsäureethylester
Verhältnis E : Z = 1,9 : 1
Gesamtgehalt an γ-Brom-tiglinsäureethylester:
82,4 Gew.%, das entspricht einer Ausbeute von 90,3 % d.Th. (bezogen auf eingesetzten 2-Methyl-3-buten-säureethylester).

### b) 0,0-Diethyl-γ-phosphono-tiglinsäureethylester

200 g des rohen gemäß a) erhaltenen γ-Brom-tiglinsäureethylesters (entsprechend 164,8 g Wertsubstanz, 0,8 mol) mit einem E/Z-Isomerenverhältnis von ca. 1,9 : 1 wurden unter Rühren innerhalb von 30 min zu 192.5 g (1,16 mol) eines 70°C warmen Phosphorigsäuretriethylesters eingetropft, wobei die Temperatur auf 102°C anstieg. Nach 80 min Rühren unter Rückflußkühlung war die Reaktion beendet. Die flüchtigen Bestandteile wurden bei 100°C und einem Druck von 10 mbar abdestilliert und das erhaltene Rohprodukt (E/Z-Isomerenverhältnis nach GC 2:1) 90 min auf 160°C erhitzt.

Eine Destillation über eine kurze Vigreux-Kolonne lieferte 182,6 g 0,0-Diethyl-γ-phosphono-tiglinsäureethylester (Ausbeute: 86.4 %) mit einem E/Z-Isomerenverhältnis von 7.7:1.

Sdp. 101 bis 105°C/0,06 mm Hg

### Beispiel 2

### γ-Brom-tiglinsäureethylester

640 g 2-Methyl-3-butensäureethylester (97 %ig, entsprechend 4,85 mol) wurden bei -30°C vorgelegt. Innerhalb von 1 h ließ man bei -40 bis -30°C 800 g (5,0 mol) Brom zulaufen. Anschließend rührte man 30 min ohne Kühlung nach. Dann wurde das Reaktionsgemisch mit 1,5 l Ethanol verdünnt. Bei -5°C ließ man nun in 1 h 398 g einer 51,25 %igen wäßrigen Natronlauge (das entspricht 5,10 mol Natriumhydroxid) zulaufen. Man rührte 15 min ohne Kühlung nach und goß den Ansatz dann auf eine Lösung von 12 g konzentrierter Schwefelsäure in 6 l Wasser. Die organische Phase wurde abgetrennt und die wäßrige Phase zweimal mit je 500 ml Methylenchlorid nachextrahiert. Die vereinigten organischen Phasen wurden über Natriumsulfat getrocknet und am Rotationsverdampfer eingeengt.

Auswaage: 1054 g roher γ-Brom-tiglinsäureethylester
Das Produkt enthielt nach NMR-Analyse
29,1 Gew.% Z-γ-Brom-tiglinsäureethylester und
56,0 Gew.% E-γ-Brom-tiglinsäureethylester
Verhältnis E : Z = 1,92 : 1
Gesamtgehalt an γ-Brom-tiglinsäureethylester: 85,1 Gew.%. Das entspricht einer Ausbeute von 89,3 % d.Th. (bezogen auf eingesetzten 2-Methyl-3-butensäureethylester).

### Beispiel 3

a) 2-Methyl-3,4-dibrom-buttersäureethylester
   128 g 2-Methyl-3-butensäureethylester (98 %ig, entsprechend 0,97 mol) wurden vorgelegt. Bei -20°C ließ man innerhalb von 1 h 160 g (1 mol) Brom zulaufen. Man ließ auf Raumtemperatur (RT) kommen. Die gaschromatographische Untersuchung des Rohproduktes (287 g) zeigte, daß sehr sauberer 2-Methyl-3,4-dibrom-buttersäureethylester erhalten wurde (Reinheit des Rohproduktes 98 bis 99 %).
   Das Rohprodukt kann durch Destillation bei 85 bis 88°C/0,4 mbar auf 100 %igen Gehalt nach GC aufgereinigt werden.
b) Zu 85,1 g des gemäß 3a erhaltenen Rohproduktes ließ man bei einer Innentemperatur von -4 bis 0°C eine Lösung von 11,8 g (0,295 mol) Natriumhydroxid in 130 ml Ethanol innerhalb von 30 min zulaufen. Dann ließ man noch 30 min nachrühren, goß auf verdünnte Salzsäure und extrahierte dreimal mit Methylenchlorid. Die vereinigten organischen Phasen werden über Natriumsulfat getrocknet und am Rotationsverdampfer eingeengt. Der Rückstand wurde bei 63 bis 70°C/0,4 mbar über eine Brücke destilliert; man erhielt 56,4 g γ-Brom-tiglinsäureester mit einem E/Z-Verhältnis von etwa 3:1.
c) 76,6 g (0,266 mol) des gemäß Beispiel 3a erhaltenen destillierten 2-Methyl-3,4-dibrom-buttersäureethylesters wurden analog Beispiel 3b) mit einer Lösung von 10,7 g (0.268 mol) Natriumhydroxid in 120 ml Ethanol umgesetzt. Nach Aufarbeitung und Destillation erhielt man 51,7 g γ-Brom-tiglinsäureester mit einem E/Z-Verhältnis von etwa 3:1.

### Beispiel 4

### a) 2-Methyl-3,4-dichlor-buttersäureethylester

107,5 g 2-Methyl-3-butensäureethylester (98 %ig, entsprechend 0,823 mol) wurden in Substanz vorgelegt. Bei -10 bis 0°C wurden unter guter Rührung innerhalb von 2 h 62,1 g (0,875 mol) Chlor eingegast. Man ließ auf RT kommen und reinigte das Rohprodukt durch Vakuumdestillation. Bei 0,4 mbar destillierten im Bereich von 65 bis 79°C 120,4 g (73,5 % d.Th.) 2-Methyl-3,4-dichlor-buttersäureethylester als Diastereomerengemisch über.

### b) γ-Chlor-tiglinsäureethylester

300 g 2-Methyl-3,4-dichlor-buttersäureethylester (Reinheit 94,9 %, entsprechend 1,43 mol) wurden bei +5°C vorgelegt. In 1 h ließ man bei dieser Temperatur eine Lösung von 60,5 g (1,51 mol) Natriumhydroxid in 600 ml Ethanol zulaufen. Man rührte 15 min nach, goß auf 1 n Salzsäure und extrahierte dreimal mit Diethylether. Die vereinigten organischen Phasen wurden über Natriumsulfat getrocknet und am Rotationsverdampfer eingeengt. Der Rückstand wurde durch Vakuumdestillation gereinigt. Bei 2 mbar destillierten zwischen 69 und 79°C 215,2 g eines Gemisches über, das 40,9 % Z-γ-Chlor-tiglinsäureethylester und 57,7 % E-γ-Chlor-tiglinsäureethylester enthielt.

E : Z = 1,4 : 1
Gesamtausbeute an γ-Chlor-tiglinsäureethylester: 91,3 % d.Th.

### c) 0,0-Diethyl-γ-phosphono-tiglinsäureester aus Z-Chlor-tiglinsäureester

22,12 g (133.1 mmol) Phosphorigsäuretriethylester wurden unter Rückfluß zum Sieden erhitzt, und innerhalb einer Stunde wurden 19.91 g (122.4 mmol) Chlor-tiglinsäureethylester mit einem E/Z-Isomerenverhältnis von 1:26 zugetropft. Nach 8 h Kochen unter Rückfluß ließ sich gaschromatographisch kein Edukt mehr nachweisen. Das E/Z-Isomerenverhältnis betrug nahezu 1:1. Durch weiteres Kochen unter Rückfluß verschob es sich auf 7,7:1.

Durch Destillation über eine kurze Vigreux-Kolonne konnten 13.4 g (41.4 % Ausbeute) Phosphonat isoliert werden.

### Beispiel 5

### 0,0-Diethyl-γ-phosphono-tiglinsäureester aus einem E/Z-Chlor-tiglinsäureestergemisch

221,42 g (1,33 mol) Phosphorigsäuretriethylester wurden unter Rückfluß zum Sieden erhitzt, und innerhalb von 2 h wurden 206.56 g Chlortiglinsäureethylester (95 %ig, entsprechend 1,21 mol) mit einem E/Z-Isomerenverhältnis von 1.4:1 zugetropft. Es wurde so lange nachgerührt, bis keine Gasentwicklung mehr stattfand.

Destillation über eine 10 cm Füllkörperkolonne lieferte 217,0 g Phosphonat (68,0 % Ausbeute) mit einem E/Z-Isomerenverhältnis von 7,6:1.

### Beispiel 6

### γ-Brom-tiglinsäureethylester aus 2-Methyl-3-buten-säureethylester

Zu 640 g 2-Methyl-3-butensäureethylester (97 %ig, entsprechend 4,85 mol) wurden bei 0°C innerhalb von 1 h 800 g (5,0 mol) Brom zugefahren. Anschließend rührte man 30 min bei 0°C nach, verdünnte mit 2 l Ethanol und fügte dann bei 0°C innerhalb von 1 h 410 g einer 51,2 gew.%igen wäßrigen Natronlauge (5,25 mol NaOH) zu. Danach rührte man 15 min bei 0°C nach und goß den Ansatz auf eine Lösung von 6 g konzentrierter Schwefelsäure in 6 l Wasser. Nach erfolgter Phasentrennung wurde die organische Phase abgetrennt und die wäßrige Phase einmal mit 1 l Toluol extrahiert und dann wurden die beiden organischen Phasen vereinigt.

Die vereinigten organischen Phasen zweier gleicher Ansätze wurden mit Hilfe eines Laborsambay-Verdampfers bei 50 mbar/60°C Heiztemperatur eingedampft. Man erhielt einen Sumpfaustrag von 2055 g mit einem Gehalt an Z-Isomerem von 38,1 % und E-Isomerem vom 53,9 %.

Dies entspricht einer durchschnittlichen Ausbeute an γ-Brom-tiglinsäureethylester von 94,2 % d.Th. pro Ansatz.

## Patentansprüche

1. Verfahren zur Herstellung von γ-Halogen-tiglinsäurealkylestern der allgemeinen Formel I 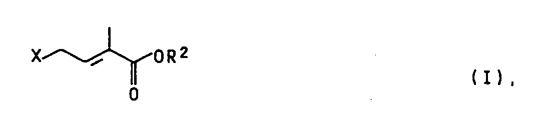 in der X für Cl oder Br steht und R² für eine Alkylgruppe mit 1 bis 3 C-Atomen steht, mit hohem E-Isomeren-Anteil, das dadurch gekennzeichnet ist, daß man
a) die entsprechenden 2-Methyl-3-buten-säureester der allgemeinen Formel II 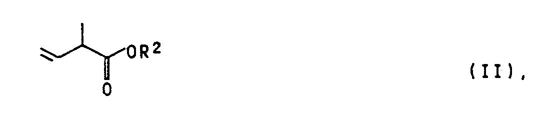 in der R² die oben angegebene Bedeutung hat, in Abwesenheit eines Lösungsmittels mit Chlor oder Brom umsetzt und
b) die dabei erhaltenen 2-Methyl-3,4-dihalogen-buttersäureester der allgemeinen Formel III 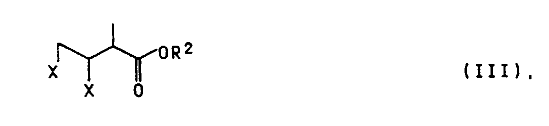 in der X für Chlor oder Brom steht, durch Umsetzen mit der Lösung eines Alkalimetallhydroxids in dem Alkohol R²OH, worin R² die oben angegebene Bedeutung hat, oder einem Gemisch aus Wasser und dem Alkohol R²OH dehydrohalogeniert.

2. Verfahren zur Herstellung von O,O-Dialkyl-γ-phosphono-tiglinsäureestern der allgemeinen Formel IV 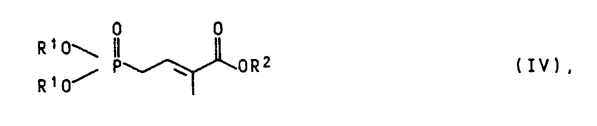 in der R¹ für Alkyl mit 1 bis 4 C-Atomen und R² für Alkyl mit 1 bis 3 C-Atomen steht mit hohem E-Isomer-Anteil, dadurch gekennzeichnet, daß man
a) die entsprechenden 2-Methyl-3-buten-säureester der allgemeinen Formel II 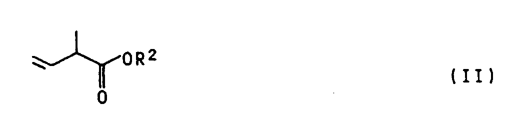 in Abwesenheit eines Lösungsmittels mit Chlor oder Brom umsetzt,
b) die erhaltenen 2-Methyl-3,4-dihalogen-buttersäureester der allgemeinen Formel III 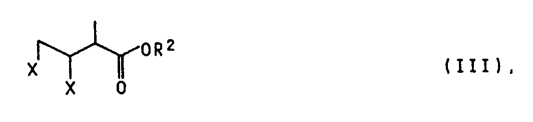 in der X für Chlor oder Brom steht, mit der Lösung eines Alkalimetallhydroxids in dem Alkohol R²OH, worin R² die oben angegebene Bedeutung hat, oder einem Gemisch aus Wasser und dem Alkohol R²OH dehydrohalogeniert,
c) die erhaltenen γ-Chlor- bzw. γ-Brom-tiglinsäureester (E/Z-Isomerengemische) der allgemeinen Formel I 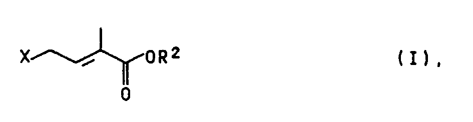 in der X und R² die oben angegebene Bedeutung haben, mit Phosphorigsäuretrialkylestern der allgemeinen Formel V 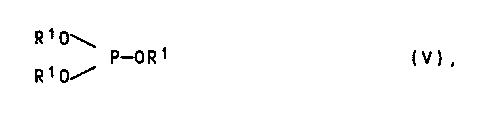 in der R¹ die oben angegebene Bedeutung hat, umsetzt und
d) die erhaltenen E/Z-O,O-Dialkyl-γ-phosphono-tiglinsäureester thermisch zu den gewünschten O,O-Dialkyl-γ-phosphono-tiglinsäureestern mit hohen E-Anteilen isomerisiert.

3. Verfahren zur Herstellung von O,O-Dialkyl-γ-phosphono-tiglinsäureestern mit hohen E-Anteilen gemäß Anspruch 2, dadurch gekennzeichnet, daß man in Stufe b) Dibromverbindungen der Formel III in Form der erhaltenen Rohprodukte dehydrohalogeniert.

4. Verfahren zur Herstellung von O,O-Dialkyl-γ-phosphono-tiglinsäureestern mit hohen E-Anteilen gemäß Anspruch 2, dadurch gekennzeichnet, daß man in Stufe c) die γ-Brom-tiglinsäureester der Formel I in Form der erhaltenen Rohprodukte mit den Phosporigsäuretrialkylestern der Formel V umsetzt.

5. Verfahren gemäß Anspruch 2, dadurch gekennzeichnet, daß man im Reaktionsschritt a) die 2-Methyl-3-butensäureester der Formel II mit Brom umsetzt,
b) die erhaltenen 2-Methyl-3,4-dibrom-buttersäureester der Formel III dehydrohalogeniert und
c) die erhaltenen γ-Brom-tiglinsäureester mit den Phosphorigsäuretrialkylestern der Formel V umsetzt.

## Claims

1. A process for the preparation of an alkyl γ-halo-tiglate of the formula I 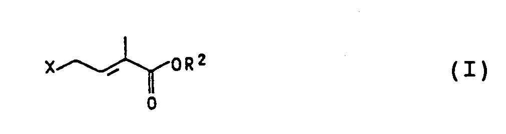 where X is Cl or Br and R² is alkyl of 1 to 3 carbon atoms, having a high E isomer content, wherein
a) the corresponding 2-methyl-but-3-enoate of the formula II 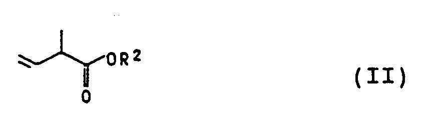 where R² has the above meaning, is reacted with chlorine or bromine in the absence of a solvent, and
b) the resulting 2-methyl-3,4-dihalobutyrate of the formula III 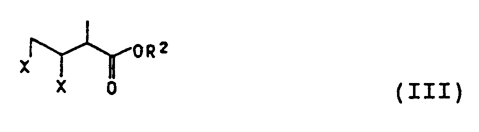 where X is chlorine or bromine, is dehydrohalogenated by reaction with a solution of an alkali metal hydroxide in an alcohol R²OH, where R² has the above meaning, or in a mixture of water and an alcohol R²OH.

2. A process for the preparation of an O,O-dialkyl γ-phosphonotiglate of the formula IV 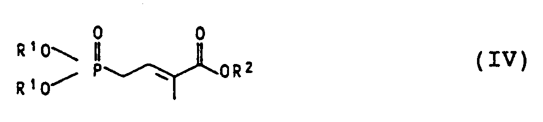 where R¹ is alkyl of 1 to 4 carbon atoms and R² is alkyl of 1 to 3 carbon atoms, having a high E isomer content, wherein
a) the corresponding 2-methyl-but-3-enoate of the formula II 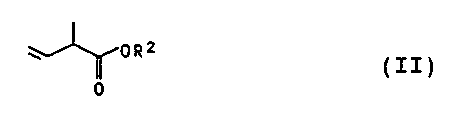 is reacted with chlorine or bromine in the absence of a solvent,
b) the resulting 2-methyl-3,4-dihalobutyrate of the formula III 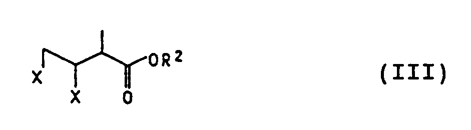 where X is chlorine or bromine, is dehydrohalogenated with a solution of an alkali metal hydroxide in an alcohol R²OH, where R² has the above meaning, or in a mixture of water and an alcohol R²OH,
c) the resulting γ-chloro- or γ-bromotiglate (E/Z isomer mixture) of the formula I 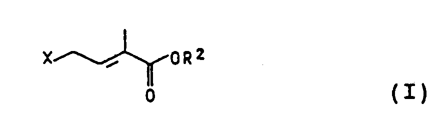 where X and R² have the above meanings, is reacted with a trialkyl phosphite of the formula V 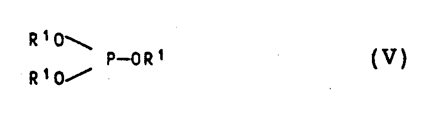 where R¹ has the above meaning, and
d) the resulting E/Z-O,O-dialkyl-γ-phosphonotiglate is subjected to thermal isomerization to give the desired O,O-dialkyl-γ-phosphonotiglate having a high E content.

3. A process for the preparation of an O,O-dialkyl-γ-phosphonotiglate having a high E content as claimed in claim 2, wherein, in stage b), a dibromo compound of the formula III in the form of the resulting crude product is dehydrohalogenated.

4. A process for the preparation of an O,O-dialkyl-γ-phosphonotiglate having a high E content as claimed in claim 2, wherein, in stage c), the γ-bromotiglate of the formula I, in the form of the resulting crude product, is reacted with a trialkyl phosphite of the formula V.

5. A process as claimed in claim 4, wherein, in reaction step a), the 2-methyl-but-3-enoate of the formula II is reacted with bromine,
b) the resulting 2-methyl-3,4-dibromobutyrate of the formula III is dehydrohalogenated and
c) the resulting γ-bromotiglate is reacted with a trialkyl phosphite of the formula V.

## Revendications

1. Procédé de préparation d'esters alkyliques de l'acide γ-halogénotiglique de formule générale I 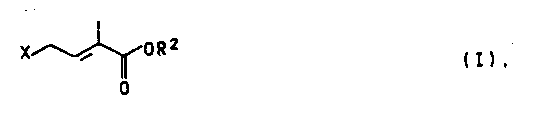 dans laquelle X est mis pour Cl ou Br et R² pour un groupement alkyle de 1 à 3 atomes de carbone, avec une proportion élevée d'isomère E, caractérisé en ce que
a) on fait réagir avec le chlore ou le brome, en l'absence de solvant, l'ester 2-méthyl-3-buténoïque correspondant de formule générale II 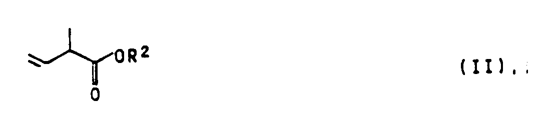 dans laquelle R² est tel que défini précédemment, et
b) on effectue la déshydrohalogénation de l'ester 2-méthyl-3,4-dihalogénobutyrique ainsi obtenu de formule III 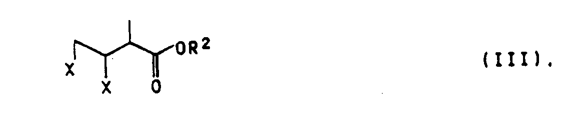 dans laquelle X est mis pour le chlore ou le brome, par réaction avec la solution d'un hydroxyde de métal alcalin dans l'alcool R²OH, ou R² est tel que défini précédemment, ou un mélange d'eau et de l'alcool R²OH.

2. Procédé de préparation d'esters d'acide O,O-dialkyl-γ-phosphonotiglique de formule générale IV 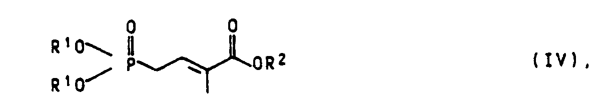 dans laquelle R¹ est mis pour un groupement alkyle de 1 à 4 atomes de carbone et R² pour un groupement alkyle de 1 à 3 atomes de carbone, avec une proportion élevée d'isomère E, caractérisé en ce que
a) on fait réagir avec le chlore ou le brome, en l'absence de solvant, l'ester 2-méthyl-3-buténoïque correspondant de formule générale II 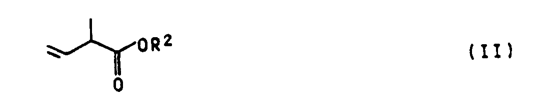
b) on effectue la déshydrohalogénation de l'ester 2-méthyl-3,4-dihalogénobutyrique ainsi obtenu de formule générale III 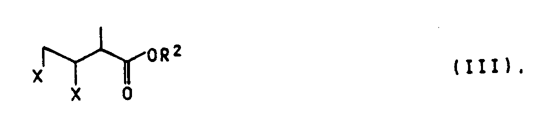 dans laquelle X est mis pour le chlore ou le brome, avec la solution d'un hydroxyde de métal alcalin dans l'alcool R²OH, où R² est tel que défini précédemment, ou un mélange d'eau et de l'alcool R²OH,
c) on fait réagir l'ester d'acide γ-chloro- ou γ-bromotiglique (mélange d'isomères E/Z) de formule générale I 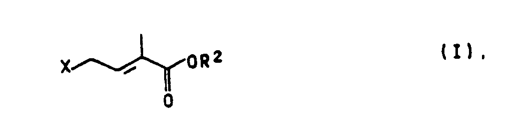 dans laquelle X et R² sont tels que définis précédemment, avec des esters trialkyliques d'acide phosphorique de formule générale V 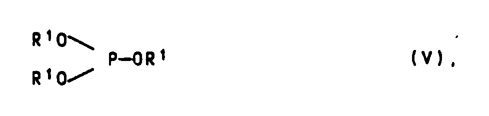 dans laquelle R¹ est tel que défini précédemment, et
d) on isomérise par voie thermique l'ester d'acide E/Z-O,O-dialkyl-γ-phosphonotiglique en les esters d'acide O,O-dialkyl-γ-phosphonotiglique désirés avec des proportions élevées d'isomère E.

3. Procédé de préparation d'esters d'acide O,O-dialkyl-γ-phosphonotiglique avec des proportions élevées d'isomère E selon la revendication 2, caractérisé en ce qu'on effectue la déshydrohalogénation dans l'étape b) de dérivés dibromés de formule III sous forme des produits bruts obtenus.

4. Procédé de préparation d'esters d'acide O,O-dialkyl-γ-phosphonotiglique avec des proportions élevées d'isomère E selon la revendication 2, caractérisé en ce qu'on fait réagir dans l'étape c) l'ester d'acide γ-bromotiglique de formule I sous forme du produit brut obtenu, avec les esters trialkyliques d'acide phosphorique.

5. Procédé selon la revendication 2, caractérisé en ce qu'on fait réagir dans l'étape réactionnel a) l'ester 2-méthyl-3-buténoïque avec du brome,
b) on effectue la déshydrohalogénation de l'ester 2-méthyl-3,4-dibromobutyrique obtenu de formule III et
c) on fait réagir l'ester γ-bromotiglique obtenu avec les esters trialkyliques d'acide phosphorique.
